# EUROPEAN PATENT APPLICATION

(11) **EP 4 832 356 A1**
(43) Date of publication of application: **28.10.2026**
(21) Application number: 25203208.1
(22) Date of filing: 18.09.2025
(51) Int. Cl.: H04B 1/00

(54) **RADIO-FREQUENCY PROCESSING DEVICE**

(30) Priority: 22.04.2025 TW 114115109
(71) Applicant: Alpha Networks Inc., 300094 Hsinchu (TW)
(72) Inventor: TSAY, Wen-Jiunn, 300094 Hsinchu (TW); YANG, Tzong-Shiann, 300094 Hsinchu (TW)
(74) Representative: Reddie & Grose LLP

(57) **Abstract**

A radio-frequency, RF, processing device (1) includes an antenna (11), and a frequency converter (12). The antenna (11) receives a plurality of incoming signals, generates an original input signal based on the incoming signals, and outputs the original input signal. The antenna (11) further receives a converted transmit signal, generates a plurality of output signals based on the converted transmit signal, and outputs the output signals. A frequency of the original input signal and a frequency of the converted transmit signal are within a millimeter wave band. The frequency converter (12) receives the original input signal, and reduces the frequency of the original input signal to generate a converted input signal. The frequency converter (12) further receives an original transmit signal, and increases a frequency of the original transmit signal to generate the converted transmit signal. The converted input signal and the original transmit signal comply with Wi-Fi^{®} standards.

## Description

The disclosure relates to a radio-frequency processing device.

The deployment of fiber optic networks faces numerous challenges in many areas, especially in remote or rural regions. The high cost of construction and the time-consuming nature of the deployment process make it difficult for fiber optics to be rapidly adopted, which further limits the expansion of network coverage.

Wireless communication technology can partially compensate for the challenges associated with the deployment of fiber optic networks. However, conventional wireless communication technologies also face several limitations, particularly in the millimeter wave (mmWave) band. The development and manufacturing of mmWave equipment involve high costs, and high-frequency transmission signals are prone to attenuation. As a result, the availability of mmWave equipment in the market is relatively limited, which further hinders the widespread adoption of conventional wireless communication technologies.

Therefore, an object of the disclosure is to provide a radio-frequency processing device that can alleviate at least one of the drawbacks of the prior art.

According to an aspect of the disclosure, there is provided a radio-frequency processing device according to claim 1.

Other features and advantages of the disclosure will become apparent in the following detailed description of the embodiment(s) with reference to the accompanying drawings. It is noted that various features may not be drawn to scale.
FIG. 1 is a block diagram illustrating a radio-frequency (RF) processing device according to an embodiment of the present disclosure.
FIG. 2 is a schematic diagram illustrating a first wireless communication device in communication with a second wireless communication device.

Before the disclosure is described in greater detail, it should be noted that where considered appropriate, reference numerals or terminal portions of reference numerals have been repeated among the figures to indicate corresponding or analogous elements, which may optionally have similar characteristics.

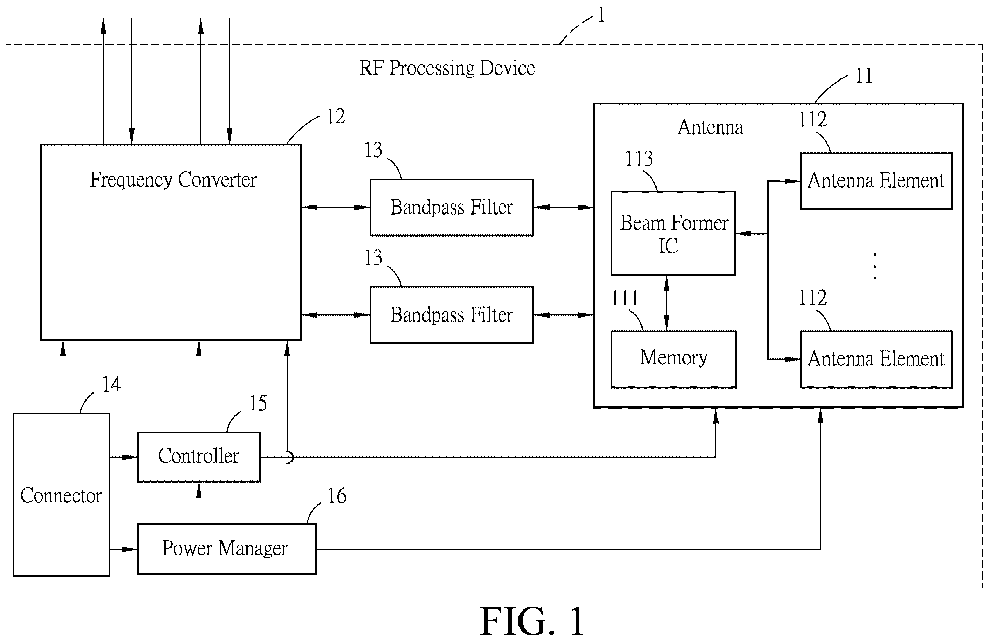

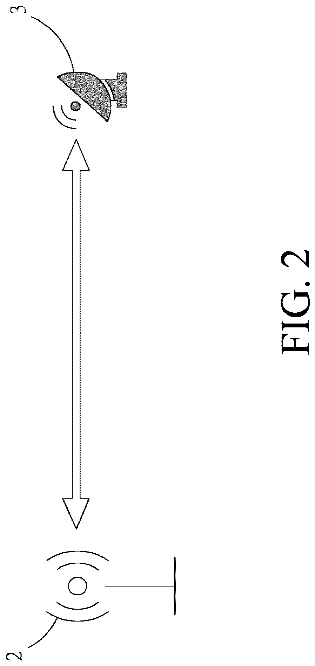

Referring to FIGS. 1 and 2, a radio-frequency (RF) processing device 1 according to an embodiment of the disclosure is adapted to be installed on a first wireless communication device 2 and a second wireless communication device 3. The first wireless communication device 2 communicates with the second wireless communication device 3 through a wireless channel. In this embodiment, the RF processing device 1 includes an antenna 11, a frequency converter 12, two bandpass filters 13, a connector 14, a controller 15, and a power manager 16.

In this embodiment, operations of the RF processing device 1 when installed on the first wireless communication device 2, are similar to operations of the RF processing device 1 when installed on the second wireless communication device 3. Therefore, for the sake of brevity, only the operations of the RF processing device 1 when it is installed on the first wireless communication device 2 will be described hereinafter.

In this embodiment, the first wireless communication device 2 and the second wireless communication device 3 are exemplified as an access point (AP) and a station (STA), respectively, where both the AP and the STA comply with the Wi-Fi^{®} 7 standard, but are not limited to such. The frequency converter 12 is exemplified as an up/down converter (UDC), but is not limited to such. The connector 14 is exemplified as a 60-pin connector, but is not limited to such. The controller 15 is exemplified as a field programmable gate array (FPGA), but is not limited to such.

The antenna 11 includes a memory 111, a plurality of antenna elements 112, and a beam former integrated circuit (IC) 113 electrically connected to the memory 111 and the antenna elements 112. The memory 111 stores a plurality of phase data sets that correspond respectively to a plurality of communication directions, and a plurality of amplitude data sets that correspond respectively to a plurality of communication power levels.

The antenna 11 is configured to, in response to receipt of a plurality of incoming signals from the second wireless communication device 3 through the wireless channel, generate an original input signal based on the incoming signals, and transmit the original input signal to the frequency converter 12. The antenna 11 is further configured to, in response to receipt of a converted transmit signal from the frequency converter 12, generate a plurality of output signals based on the converted transmit signal, and transmit the output signals to the second wireless communication device 3 through the wireless channel.

The frequency converter 12 is configured to, in response to receipt of the original input signal, reduce the frequency of the original input signal to generate a converted input signal, and in response to receipt of an original transmit signal, increase a frequency of the original transmit signal to generate the converted transmit signal.

In this embodiment, the bandpass filters 13 are electrically connected between the antenna 11 and the frequency converter 12. That is to say, the antenna 11 is electrically connected indirectly to the frequency converter 12 via the bandpass filters 13. The bandpass filters 13 are configured to perform bandpass filtering on the original input signal outputted by the antenna 11, and transmit the original input signal thus filtered to the frequency converter 12. The bandpass filters 13 are further configured to perform bandpass filtering on the converted transmit signal outputted by the frequency converter 12, and transmit the converted transmit signal thus filtered to the antenna 11. In some embodiments, the bandpass filters 13 may be omitted, and the antenna 11 may be electrically connected directly to the frequency converter 12. That is to say, in such embodiments, signals transmitted between the antenna 11 and the frequency converter 12 do not undergo bandpass filtering.

It should be noted that, in this embodiment, a number of the bandpass filters 13 corresponds to a number of channels usable by the first wireless communication device 2 and the second wireless communication device 3 to communicate with each other. The number of channels may be determined by a user according to application requirements, but is not limited to such. In this embodiment, the number of channels that the first wireless communication device 2 and the second wireless communication device 3 may use to perform data transmission and data reception is two. Therefore, in this embodiment, the number of the bandpass filters 13 is two, but the number of the bandpass filters 13 is not limited to such.

The connector 14 is electrically connected to the frequency converter 12. The controller 15 is electrically connected to the antenna 11, the frequency converter 12, and the connector 14.

The power manager 16 is configured to receive direct current (DC) power from an external power source (not shown) via the connector 14, and to supply power to the antenna 11, the frequency converter 12, and the controller 15.

The RF processing device 1 is operable in a reception mode and a transmission mode.

When the RF processing device 1 is operating in the reception mode, the controller 15 receives a control signal for reception from an external source (e.g., an external device) (not shown) via the connector 14. The control signal for reception includes a target communication direction, a target communication power level, and a frequency difference value. In response to receipt of the control signal for reception, the controller 15 transmits the target communication direction and the target communication power level to the beam former IC 113. The antenna elements 112 respectively receive the incoming signals from the second wireless communication device 3 through the wireless channel, and transmit the incoming signals to the beam former IC 113. The beam former IC 113, in response to receipt of the target communication direction and the target communication power level, selects one of the phase data sets based on the target communication direction, and selects one of the amplitude data sets based on the target communication power level. Then, the beam former IC 113 performs phase adjustment on a phase of each of the incoming signals based on the one of the phase data sets thus selected, and performs amplitude adjustment on an amplitude of each of the incoming signals based on the one of the amplitude data sets thus selected. After the phase and the amplitude of each of the incoming signals have been adjusted, the beam former IC 113 merges the incoming signals thus adjusted to generate the original input signal. By virtue of this arrangement, the antenna 11 is able to increase a reception quality of the incoming signals by adjusting a communication direction in which the antenna 11 receives the incoming signals toward the target communication direction (e.g., toward the second wireless communication device 3). One of the bandpass filters 13 then performs the bandpass filtering on the original input signal outputted by the antenna 11, and transmits the original input signal thus filtered to the frequency converter 12. A frequency of the original input signal is within a millimeter wave (mmWave) band. The controller 15 then controls the frequency converter 12 to reduce, by a frequency amount, the frequency of the original input signal to generate the converted input signal based on the frequency difference value included in the control signal for reception. The converted input signal complies with Wi-Fi^{®} standards.

When the RF processing device 1 is operating in the transmission mode, the controller 15 receives a control signal for transmission from the external source via the connector 14. The control signal for transmission includes another target communication direction, another target communication power level, and the frequency difference value. In response to receipt of the original transmit signal, the controller 15 controls the frequency converter 12 to increase, by the frequency amount, the frequency of the original transmit signal to generate the converted transmit signal based on the frequency difference value included in the control signal for transmission. The original transmit signal complies with Wi-Fi^{®} standards, and a frequency of the converted transmit signal is within the mmWave band. Then, one of the bandpass filters 13 performs the bandpass filtering on the converted transmit signal outputted by the frequency converter 12, and transmits the converted transmit signal thus filtered to the antenna 11. The controller 15 transmits the another target communication direction and the another communication power level to the beam former IC 113. The beam former IC 113, in response to receipt of the another target communication direction and the another target communication power level, selects another one of the phase data sets based on the another target communication direction, and selects another one of the amplitude data sets based on the another target communication power level. Then, the beam former IC 113 splits the converted transmit signal thus filtered into multiple signals, performs the phase adjustment on the phases respectively of the multiple signals based on the another one of the phase data sets, and performs the amplitude adjustment on amplitudes respectively of the multiple signals based on the another one of the amplitude data sets in order to generate the output signals that correspond respectively to the antenna elements 112. Each of the antenna elements 112 then transmits a respective one of the output signals to the second wireless communication device 3 through the wireless channel. By virtue of this arrangement, the antenna 11 is able to increase transmission quality by adjusting the communication direction in which the antenna 11 transmits the output signals toward the another target communication direction (e.g., toward the second wireless communication device 3).

In this embodiment, the antenna 11 uses a beamforming technique to receive the incoming signals, and to transmit the output signals. The communication direction in which the antenna 11 receives the incoming signals and transmits the output signals is adjustable. The converted transmit signal and the original input signal may be signals in the Wi-Fi^{®} frequency band, and the frequency band may be around and may cover 2.4 gigahertz (GHz), 5 GHz, 6 GHz, etc. In one embodiment, the converted transmit signal and the original input signal may have a center frequency of 2.4 GHz, 5 GHz, or 6 GHz, and a bandwidth of 320 megahertz (MHz). A frequency difference between the converted input signal and the original input signal, and a frequency difference between the original transmit signal and the converted transmit signal are adjustable. That is to say, a frequency offset applied to a signal inputted into the frequency converter 12 is adjustable. In this embodiment, the frequency converter 12 receives a reference clock signal from the external source via the connector 14, and reduces the frequency of the original input signal and increases the frequency of the original transmit signal based on the reference clock signal, but the disclosure is not limited in this respect.

The mmWave band includes, for example, 26.5 GHz to 27.5 GHz range within frequency range 2 (FR2) of the 5^{th} Generation (5G) New Radio (NR) frequency bands defined by the 3^{rd} Generation Partnership Project (3GPP), but the disclosure is not limited in this respect. In other embodiments, the mmWave band may be in the range of 24 GHz to 28 GHz, the range of 37 GHz to 49 GHz, the range of 64 GHz to 71 GHz, or other ranges above 24 GHz. In one embodiment, the STA is randomly distributed within a sector coverage of the AP. Within this sector coverage, the controller 15 can control the beam former IC 113 to perform a beam pointing control to identify an optimal pointing direction (i.e., the communication direction) from the AP to the STA. The scannable azimuth angle range can be, for example, from -60 degrees to +60 degrees, and the scannable elevation angle range can be, for example, from -20 degrees to +20 degrees. By virtue of this arrangement, the RF processing device 1 of this disclosure is able to provide a communication path that is optimum for communication of the STA.

The abovementioned arrangement forms a fixed wireless access (FWA) system. The FWA system can convert signals from the Wi-Fi^{®} frequency band (e.g., around and covering 6 GHz frequency) to the mmWave band (e.g., the mmWave 3GPP FR2 frequency band that is in the bandwidth of 26.5 GHz to 27.5 GHz) that has a bandwidth of 320 MHz for users to flexibly configure and use. In one embodiment, the controller 15 is further configured to support a 1000 MHz bandwidth transmission, or simultaneous transmission over three 320 MHz bandwidth channels. In this configuration, each STA can share the uplink and downlink wireless bandwidth in a multi-access manner, depending on the communication needs, regardless of whether the distance is 100 meters, 500 meters, or even 1200 meters.

In summary, the beam former IC 113 is able to perform the phase adjustment based on the one of the phase data sets thus selected or the another one of the phase data sets thus selected. By virtue of this arrangement, the RF processing device 1 of this disclosure is able to focus a communication energy to a specific direction (i.e., the target communication direction and the another target communication direction), and improve a signal strength in the specific direction, thereby compensating for communication losses in the mmWave band. Furthermore, by virtue of the beam former IC 113 being able to perform the phase adjustment, the RF processing device 1 of this disclosure is able to support a stable signal reception when the second wireless communication device 3 is placed at different locations, and is able to dynamically track the second wireless communication device 3 when a network coverage of the mmWave band is limited. In addition to that, by virtue of the beam former IC 113 being able to perform the amplitude adjustment based on the one of the amplitude data sets thus selected and the another one of the amplitude data sets thus selected, the original input signal generated by the antenna 11 and the output signals outputted by the antenna 11 may respectively have the desired power levels. Besides that, the frequency converter 12 is able to reduce the frequency of the original input signal in order to generate the converted input signal that is able to be processed by the first wireless communication device 2, and is able to increase the frequency of the original transmit signal to generate the converted transmit signal that has a frequency within the mmWave band. By installing the RF processing device 1 of this disclosure on the first wireless communication device 2 that complies with Wi-Fi^{®} standards, the first wireless communication device 2 may be used as an mmWave band device, thereby significantly reducing the development and manufacturing costs of the mmWave band device.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A radio-frequency, RF, processing device (1) adapted to be installed on a first wireless communication device (2), the first wireless communication device (2) communicating with a second wireless communication device (3) through a wireless channel, said RF processing device (1) being **characterized by**:
an antenna (11); and
a frequency converter (12) electrically connected to said antenna (11);
wherein said antenna (11) is configured to, in response to receipt of a plurality of incoming signals from the second wireless communication device (3) through the wireless channel, generate an original input signal based on the plurality of incoming signals, and transmit the original input signal to said frequency converter (12), and in response to receipt of a converted transmit signal from said frequency converter (12), generate a plurality of output signals based on the converted transmit signal, and transmit the plurality of output signals to the second wireless communication device (3) through the wireless channel, a frequency of the original input signal and a frequency of the converted transmit signal being within a millimeter wave band; and
wherein said frequency converter (12) is configured to, in response to receipt of the original input signal, reduce the frequency of the original input signal to generate a converted input signal, and in response to receipt of an original transmit signal, increase a frequency of the original transmit signal to generate the converted transmit signal, the converted input signal and the original transmit signal complying with Wi-Fi^{®} standards.

2. The RF processing device (1) as claimed in Claim 1, further comprising:
a bandpass filter (13) electrically connected between said antenna (11) and said frequency converter (12), configured to perform bandpass filtering on the original input signal outputted by said antenna (11), and transmit the original input signal thus filtered to said frequency converter (12), and further configured to perform bandpass filtering on the converted transmit signal outputted by said frequency converter (12), and transmit the converted transmit signal thus filtered to said antenna (11).

3. The RF processing device (1) as claimed in Claim 1 or 2, wherein a communication direction in which said antenna (11) receives the plurality of incoming signals and transmits the plurality of output signals is adjustable.

4. The RF processing device (1) as claimed in any one of Claims 1 to 3, wherein said antenna (11) uses a beamforming technique to receive the plurality of incoming signals and to transmit the plurality of output signals.

5. The RF processing device (1) as claimed in any one of Claims 1 to 4, wherein said antenna (11) includes a beam former integrated circuit, IC, (113), and a plurality of antenna elements (112) that are electrically connected to said beam former IC (113);
wherein said plurality of antenna elements (112) are configured to, respectively receive the plurality of incoming signals from the second wireless communication device (3) through the wireless channel, and transmit the plurality of incoming signals to said beam former IC (113), and said beam former IC (113) is configured to, in response to receipt of the plurality of incoming signals respectively from said plurality of antenna elements (112), perform phase adjustment on a phase of each of the plurality of incoming signals, and merge the plurality of incoming signals thus adjusted to generate the original input signal; and
wherein said beam former IC (113) is further configured to, in response to receipt of the converted transmit signal from said frequency converter (12), split the converted transmit signal into multiple signals, perform phase adjustment on phases respectively of the multiple signals to generate the plurality of output signals that correspond respectively to said plurality of antenna elements (112), and transmit the plurality of output signals respectively to said plurality of antenna elements (112), and each of said plurality of antenna elements (112) is further configured to, in response to receipt of a respective one of the plurality of output signals, transmit the respective one of the plurality of output signals to the second wireless communication device (3) through the wireless channel.

6. The RF processing device (1) as claimed in Claim 5, wherein said antenna (11) further includes a memory (111) that is electrically connected to said beam former IC (113), and that stores a plurality of phase data sets corresponding respectively to a plurality of communication directions, and said beam former IC (113) is further configured to select one of the plurality of phase data sets based on a target communication direction, and perform phase adjustment based on the one of the plurality of phase data sets thus selected.

7. The RF processing device (1) as claimed in Claim 5, wherein said antenna (11) further includes a memory (111) that is electrically connected to said beam former IC (113), and that stores a plurality of amplitude data sets corresponding respectively to a plurality of communication power levels, and said beam former IC (113) is further configured to select one of the plurality of amplitude data sets based on a target communication power level, and perform amplitude adjustment on the plurality of incoming signals respectively received by said plurality of antenna elements (112), and on the multiple signals that were split from the converted transmit signal based on the one of the plurality of amplitude data sets thus selected.

8. The RF processing device (1) as claimed in any one of Claims 1 to 7, wherein the converted input signal and the original transmit signal include a center frequency and a bandwidth, the center frequency being one of 2.4 GHz, 5 GHz, and 6 GHz, the bandwidth being 320 MHz, and a range of the millimeter wave band is one of 26.5 GHz to 27.5 GHz, 24 GHz to 28 GHz, 37 GHz to 49 GHz, and 64 GHz to 71 GHz.

9. The RF processing device (1) as claimed in any one of Claims 1 to 8, wherein a frequency difference between the converted input signal and the original input signal, and a frequency difference between the original transmit signal and the converted transmit signal are adjustable.

10. The RF processing device (1) as claimed in any one of Claims 1 to 9, further comprising:
a connector (14) electrically connected to said frequency converter (12),
wherein said frequency converter (12) is further configured to receive a reference clock signal from an external source via said connector (14), and reduce the frequency of the original input signal and increase the frequency of the original transmit signal based on the reference clock signal.

11. The RF processing device (1) as claimed in any one of Claims 1 to 9, further comprising:
a connector (14); and
a controller (15) electrically connected to said connector (14), said antenna (11), and said frequency converter (12), and configured to receive a control signal from an external source via said connector (14), control a communication direction in which said antenna (11) receives the plurality of incoming signals and transmits the plurality of output signals based on the control signal, and control a frequency amount by which said frequency converter (12) reduces the frequency of the original input signal and increases the frequency of the original transmit signal based on the control signal.

12. The RF processing device (1) as claimed in any one of Claims 1 to 11, further comprising:
a power manager (16) configured to supply power to said antenna (11) and said frequency converter (12).
